# EUROPEAN PATENT APPLICATION

(11) **EP 2 068 013 A1**
(43) Date of publication of application: **10.06.2009**
(21) Application number: 08105877.8
(22) Date of filing: 27.11.2008
(51) Int. Cl.: F16B 39/10, F16B 39/22

(54) **Safety device**

(30) Priority: 05.12.2007 GB 0723769
(71) Applicant: Interparts Automotive B.V., 1423 RL Uithoorn (NL)
(72) Inventor: de Groot, Albertus Abraham Petrus, 1423 RL, Uithoorn (NL)
(74) Representative: Voncken, Bartholomeus Maria Ch.

(57) **Abstract**

A locking device with a ratchet to secure two or more screw-action connectors for axial rotation in one direction and to allow rotating of the connectors in one opposite axial direction, containing two rings with teeth on the outer side, each ring to fit around these connectors, and assembled with a body with teeth on the inner side, enclosing these two rings, where the mating teeth of ring and body generate a ratchet, to allow ratcheting the ring in one axial direction, and blocking the axial rotation of the ring and connector in the opposite direction

## Description

The present invention relates to a safety device. The invention is to prevent fasteners from getting loose whilst in use, and from being loosened during service.

A common method for attaching a vehicle wheel to a rotating hub, is to provide a number of fixed threaded studs on the rotatable hub. The wheel is attached to the hub by means of wheel nuts engaging the studs passing through opening spaces in the wheel. It is common to use right and left threaded studs.

Because of common experience that nuts, or fasteners, get loose in service on trucks, trailers and buses, this can lead to a loose wheel on the vehicle in use.

Specifically in the bus industry it is common to have procedures to re-torque the wheel nut fasteners after initial fit, and to re-torque these fasteners within the next day and/or days and during the regular maintenance service.

Locking devices like the ones mentioned in the patents GB2229241 and EP1169183, do have a locking function in both directions, but aren't capable of adjusting or rotating f the nut in one direction.

In case a locking device is used, it is preferable for efficiency reasons if the locking device can stay on the wheel nut during these torque checks, and allows an axial rotation of the fastener in one direction. In most truck, trailer and bus applications a device up to around a height of 9 mm, can stay on the fastener during the proper use of tools, like a socket wrench.

This invention provides a device making a connection between two or more fasteners, like wheel nuts. The device contains a ratchet, while fitted on the fasteners, allows axial rotating of the fastener in one direction, and the device blocks the fastener to rotate in the opposite axial direction.

The function of the device is to prevent the fastener becoming loose, and while fitted on the fastener, capable of adjusting along with the fastener, during the fastening process or checking processes.

The device has a limited height, so the device can stay on the fastener during torque and re-torque of the fasteners.

One of the embodiments is a device that can be used for right and left threaded fasteners, just by fitting the device on the other side.

Hereinafter the invention is illustrated in the figures, in which:

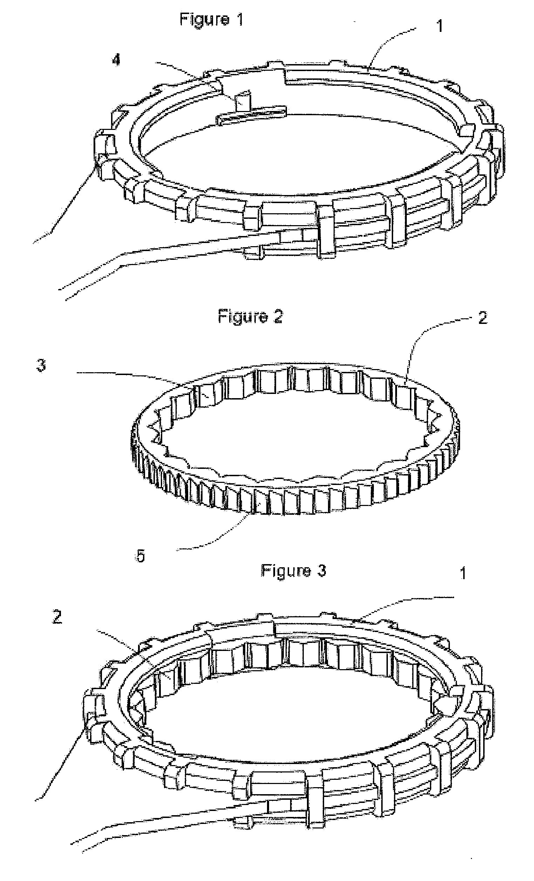

Figure 1 shows a detail of the body and teeth;
Figure 2 shows the ring which comprises an inner mating structure to a hexagon nut and an outer side showing teeth;
Figure 3 shows a part of the device with ring and body;
Figure 4 shows an assembled part of the device and in detail the ratchet between the teeth of the ring and the teeth of the body;

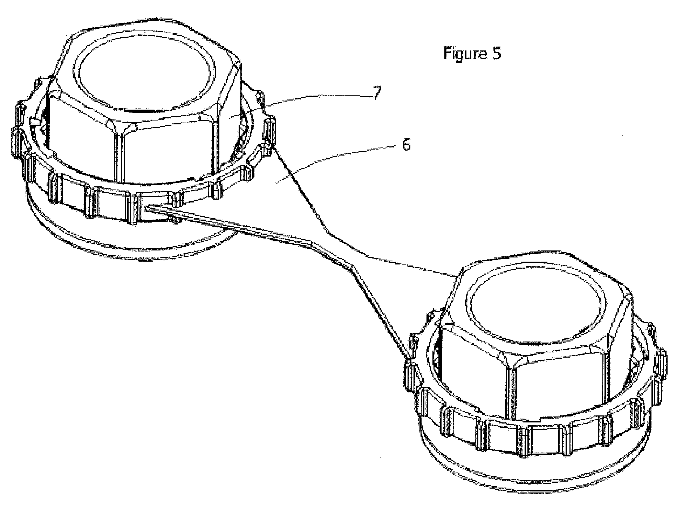

Figure 5 shows a complete device containing two assembled bodies and rings, fitted on two fasteners;
Figure 6 shows a top-view of a body with a device, where the teeth of the body are positioned on a strip connected to the body, and a detail of the body, specifically showing the strip and the teeth;
Figure 7 shows a side-view of a body, indicating the height in mm;

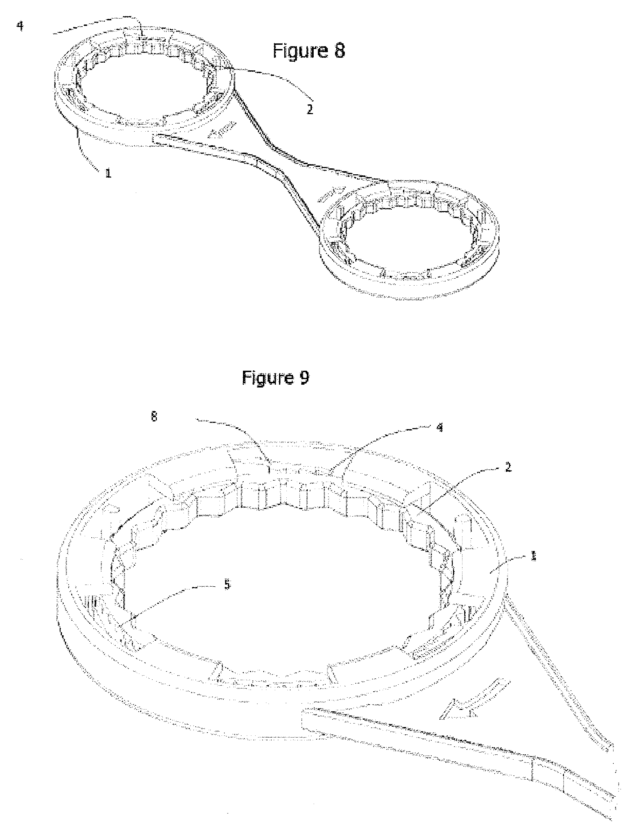

Figure 8 shows an impression of an assembled device, with ring and body including the teeth of the body, placed on a strip, and
Figure 9 shows a detailed impression of figure 8.

This invention provides an inner ring (2). The inner ring is fitted over the fastener (7) and mates with the fastener in such a way that if the fastener axially rotates, the ring rotates with it.

One of the embodiments of the inner side of the ring is a hexagon design, or a multiple fit, and mates the hexagon nut (3).

In practice the device (6) will be fitted over two or more fasteners, and in case the position of the ring (2) doesn't match exactly the position of the fastener, like a hexagon design, it is preferable that the body is slightly flexible, to accommodate the fitting.

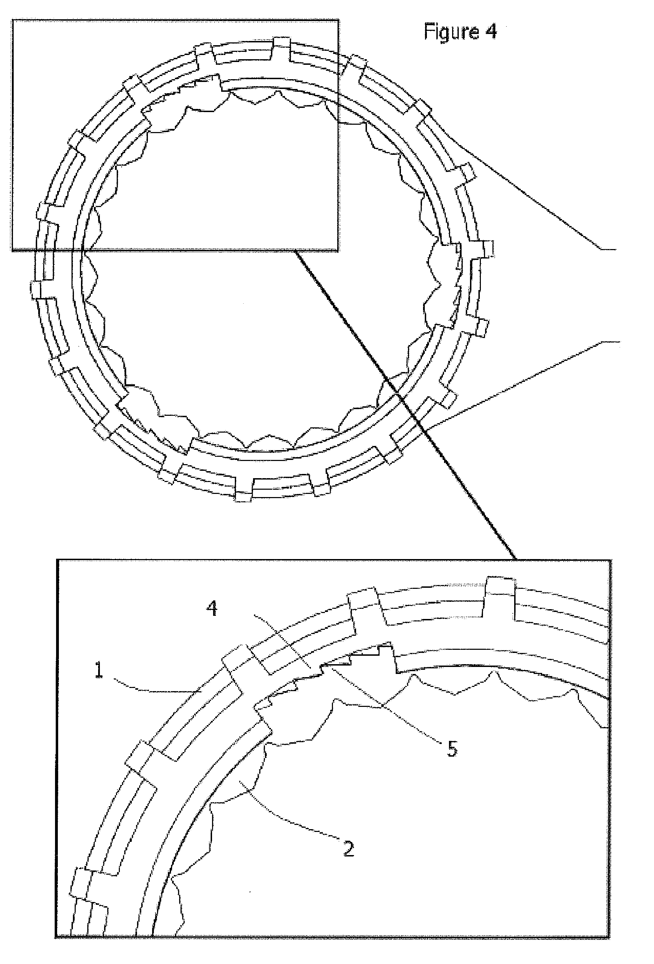

The device contains a body (1) which, when fitted over two or more rings (2) and fasteners, provides the rigid reference for the ratchet. The body contains teeth (4) mating the teeth (5) of the ring (1), so the combination makes a ratchet shown in figure 4, and allows the ring to rotate in one direction.

In case the ring is forced by the fastener (7) to rotate in the opposite axial direction as a result of loosening, the teeth (4 and 5) of the ring (2) and the body (1) hook into each other, and prevent an axial rotation (see figure 4). So in case the fastener starts to become loose, it is blocked for axial rotation.

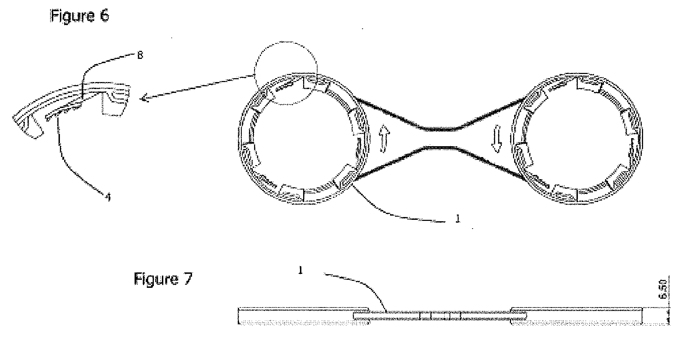

An other version is to fabric the teeth (4) as shown in figure 6 and 7 on a strip (8), using the elasticity of the material, bouncing during the adjustable phase of axial rotation of the ring during ratcheting, and functioning as snap fingers, to minimize wear or damage on the teeth of these both parts.

An alternative version is to put the teeth of the ring (2) on a strip, with the same function.

One of the versions is to use flexible materials so the play between both teeth can be very limited or not existing, and the elasticity of one or both materials, allowing the teeth ratcheting over each other, with no or limited wear.

Materials as PE, PP and PA, and polymers or hybrids of these are very suitable for this invention.

A different embodiment is to make the device (6), containing two or more bodies (1), out of two or more parts, which can be assembled to one body.

Also the device can link more than two fasteners (7), or a ring covering and linking all fasteners, for example all fasteners on a wheel of a vehicle.

In case the fasteners are threaded right-handed, and therefore a clockwise rotation of the fastener provides a fastening, the device should be fitted with the ratchet in clockwise direction. Fort fasteners threaded left-handed the device can be used by fitting it in a way so the ratchet is working anti clockwise.

The invention is not limited to the embodiments shown which may be varied widely within the scope of the invention as defined by the appending claims.

## Claims

1. A locking device for screw-action connectors, containing two rings with teeth on the outer side, each ring to fit around these connectors, and assembled with a body with teeth on the inner side, enclosing these two rings, where the mating teeth of ring and body generate a ratchet, to allow ratcheting the ring in one axial direction, and blocking the axial rotation of the ring and connector in the opposite direction.

2. A device according to claim 1, where the teeth (4) of the body (1) are fabricated on a strip.

3. A device according to claim 1 and 2, wherein the teeth (5) of the ring (2) are fabricated on a strip.

4. A device according to any of the previous claims, with a limited height so the connector still can be axial rotated with a tool, like a socket wrench

5. A device according to any of the previous claims, wherein the body links more than two connectors (7).

6. A device according to any of the previous claims, wherein the body (1) contains more than one piece.

7. A device according to any of the previous claims, fabricated out of polymers or hybrids

8. A device according to any of the previous claims for vehicle purposes.

9. A device according to any of the previous claims, wherein the body is fabricated to a ring for a wheel, covering more than two wheel nuts.
